# EUROPÄISCHE PATENTSCHRIFT

(11) **EP 4 388 212 B1**
(45) Veröffentlichungstag und Bekanntmachung des Hinweises auf die Patenterteilung: **25.03.2026**
(21) Anmeldenummer: 22733509.8
(22) Anmeldetag: 30.05.2022
(51) Int. Cl.: F16C 29/00

(54) **MONTAGESCHIENE ZUM MONTIEREN EINES FÜHRUNGSWAGENS EINER LINEARFÜHRUNG AUF EINE FÜHRUNGSSCHIENE**
MOUNTING RAIL FOR MOUNTING A GUIDE CARRIAGE OF A LINEAR GUIDE ONTO A GUIDE RAIL
RAIL DE MONTAGE POUR LE MONTAGE D'UN CHARIOT DE GUIDAGE D'UN GUIDE LINÉAIRE SUR UN RAIL DE GUIDAGE

(30) Priorität: 19.08.2021 DE 102021121485
(43) Veröffentlichungstag der Anmeldung: 26.06.2024
(73) Patentinhaber: Schaeffler Technologies AG & Co. KG, 91074 Herzogenaurach (DE)
(72) Erfinder: ELICKER, Thomas, 66916 Breitenbach (DE); HEIPT, Peter, 66386 St. Ingbert (DE); BECKER, Thomas, 66424 Jägersburg (DE)
(74) Vertreter: Schaeffler Technologies
(86) Internationale Anmeldenummer: PCT/DE2022/100403
(87) Internationale Veröffentlichungsnummer: WO 2023/020646

(56) Entgegenhaltungen:
- DE-A1- 10 227 727
- DE-A1- 102015 209 311
- DE-A1- 4 209 441
- DE-B3- 102013 210 695
- JP-A- 2016 125 600

## Beschreibung

Die vorliegende Erfindung betrifft eine Montageschiene zum Montieren eines Führungswagens einer Linearführung auf eine Führungsschiene.

Aus DE 10 2012 213 973 A1 ist eine Montageschiene nach den Merkmalen des Oberbegriffs des Anspruchs 1 bekannt geworden. Die Montageschiene wird mit ihrem Montagekopf stirnseitig gegen die Führungsschiene angelegt um einen schaltbaren Anschlag zu betätigen, der ein Verschieben des Führungswagens von der Montageschiene auf die Führungsschiene ermöglicht. Wenn im Übergang von der Montageschiene zu der Führungsschiene eine Kante entsteht, überrollt der Führungswagen diese Kante während des Verschiebens. Wenn der Führungswagen mit stirnseitigen Abstreifern versehen ist, können diese Abstreifer an dieser Kante beschädigt werden.

DE 10 2013 210695 B3 offenbart die Merkmale des Oberbegriffs von Anspruch 1.

Aufgabe der vorliegenden Erfindung war es, eine Montageschiene für einen Führungswagen anzugeben, der ein einwandfreies Verschieben des Führungswagens von der Montageschiene auf die Führungsschiene und umgekehrt ermöglicht. Erfindungsgemäß wird diese Aufgabe durch die Montageschiene gemäß Anspruch 1 gelöst. Zweckdienliche Weiterbildungen sind in den Unteransprüchen angegeben. Die Montageschiene zum Montieren eines Führungswagens einer Linearführung auf eine Führungsschiene betrifft insbesondere Montageschienen für Profilschienenwälzführungen, deren Führungswagen im Querschnitt gesehen etwa u-förmig sind und die Führungsschiene mit ihren beiden Schenkeln umgreifen. Die Schenkel der Führungswagen tragen Laufbahnen für Wälzkörper, die zusammen mit Laufbahnen der Führungsschiene Wälzkörperkanäle bilden, in denen die Wälzkörper entlang wälzen. Die Laufbahnen der Führungsschiene sind an den voneinander abgewandten Seitenflächen der Führungsschiene ausgebildet.

Üblicherweise umgreifen die Führungswagen von Profilschienenwälzführungen mit ihren Schenkeln die Führungsschiene und zu Montagezwecken auch die Montageschiene. Die Schenkel des Führungswagens tragen an ihren einander zugewandten Längsseiten Laufbahnen für Wälzköper, die jeweils einer der beiden Seitenflächen der Montageschiene gegenüberliegend angeordnet sind, die Laufbahnen der Schenkel und die Seitenflächen der Montageschiene sind einander zugewandt. Der Rücken des Führungswagens - der die beiden Schenkel miteinander verbindet - ist mit seiner innen liegenden Rückenfläche der Dachfläche der Montageschiene zugewandt. Die innere Rückenfläche und die Dachfläche sind einander gegenüberliegend angeordnet. Die Montageschiene weist eine Montagekontur auf, die an die Kontur der Führungsschiene angepasst ist, um den Führungswagen einwandfrei von der Montageschiene auf die Führungsschiene und umgekehrt zu verlagern. Die Montagekontur weist an voneinander abgewandten Längsseiten der Montageschiene ausgebildete Seitenflächen auf, sowie eine zwischen den Seitenflächen angeordnete Dachfläche. Die Längsseiten stützen die ggfs in dem Führungswagen eingesetzten Wälzkörper, damit diese nicht herausfallen. Die Dachfläche ist an die führungsschienenseitige Dachfläche angepasst. Die Führungswagen sind in vielen Fällen mit sogenannten Frontabstreifern versehen, die die Führungsschiene umgreifen und an deren Längsseiten und Oberseite anliegen können.

Die Montageschiene ist stirnseitig mit quer zur Längsachse angeordneten Anlageflächen zur Anlage an die Führungsschiene versehen. Wenn die Montageschiene einwandfrei anliegt, kann der Führungswagen verlagert werden auf die Führungsschiene. Die eine Anlagefläche der Montageschiene ist im Übergang zu den Seitenflächen und zu der Dachfläche mit einer Fase versehen, die andere Anlagefläche schließt unmittelbar unter einem Winkel von 90 Grad an die Seitenflächen und an die Dachfläche des anderen Montagekopfes an, ist also kantig.

Diese Anordnung bietet den Vorteil der Verwendung derselben Montageschiene für zwei verschiedenen Typen von Führungsschienen: der erste Typ, der stirnseitig mit einer Fase im Übergang von der Stirnfläche zu den Seitenflächen und zu der Dachfläche versehen ist; der zweite Typ, der stirnseitig im Übergang von der Stirnfläche zu Seitenflächen und zu der Dachfläche unter einem Winkel von 90 Grad anschließt.

Im Fall des ersten Typs der Führungsschiene wird die Montageschiene mit der angefasten Anlagefläche an die Führungsschiene gelegt. Die Fasen von Montageschiene und Führungsschiene sind derart aufeinander abgestimmt, dass im Übergang zwischen Montageschiene und Führungsschiene keine störende Kante gebildet ist. Während der Montage gleiten die Abstreifer des Führungswagens zunächst in einen Freiraum hinein, der in einer Richtung quer zur Führungsschiene gesehen etwa dreieckförmig gebildet ist; dieses Dreieck ist gebildet durch eine Ebene, in der die Dachflächen der Montageschiene und der Führungsschiene liegt, sowie durch die Fasen der Montageschiene und der Führungsschiene. Der Abstreifer gleitet zunächst entlang der Fase der Montageschiene, wobei ein Abheben des Abstreifers von der Fase möglich ist. Schließlich gleitet der Abstreifer am tiefsten Punkt des beschriebenen Dreiecks entlang der Fase der Führungsschiene weiter, bis er die Mantelfläche der Führungsschiene erreicht, also deren Seitenflächen und die Dachfläche. In dieser Anordnung sind die Fasen der Führungsschiene und der Montageschiene vorzugsweise spiegelsymmetrisch zueinander; das bedeutet, dass die Demontage des Führungswagens von der Führungsschiene in gleicher Weise erfolgt wie dessen Montage, ohne dass die Abstreifer des Führungswagens auf Kanten im Übergang von der Führungsschiene und der Montageschiene stoßen.

Im Fall des zweiten Typs ist die Führungsschiene mit scharfkantigen Enden versehen, also ohne Fasen im Übergang von der Anlagefläche zu den Seitenflächen und zu der Dachfläche. Die Montageschiene wird in diesem Fall mit ihrem kantigen Ende gegen die Anlagefläche der Führungsschiene angelegt. Die Seitenflächen sowie die Dachflächen der Führungsschiene und des Montagekopfes liegen auf gemeinsamen Ebenen. Der Übergang von Montageschiene zur Führungsschiene ist glatt, also kantenfrei. Wenn der Führungswagen auf die Führungsschiene verschoben wird berühren weder die Abstreifer noch die Wälzkörper Kanten. Die Wälzkörper des Führungswagens können diesen Übergang schadlos überrollen und Frontabstreifer bleiben nicht hängen.

Für eine weitere Erleichterung der Montage ist die Montageschiene an ihren axialen Enden jeweils mit einem von der Anlagefläche ausgehenden Schlitz versehen**,** der sich in Richtung auf das andere axiale Ende und radial einwärts erstreckt. Wenn der Führungswagen von der Montageschiene auf die Führungsschiene geschoben wird und der Führungswagen den Montagekopf überfährt kann der Montagekopf im Bereich des Schlitzes radial einwärts gedrückt werden, und zwar nur soweit, wie der Führungswagen Platz benötigt. Der Schlitz kann federelastisch auslenkbare Zungen an den Enden der Montageschiene bilden, die gegen eine Federkraft aufeinander zu auslenkbar sind.

Vorzugsweise ist der Schlitz parallel zur Längsachse und mittig in der Montageschiene angeordnet. Auf diese Weise ist eine gleichmäßige Auslenkung der Zungen sichergestellt.

An beiden Enden der Montageschiene können Montageköpfe ausgebildet sein mit der an eine Kontur der Führungsschiene angepassten Montagekontur. Diese Montageköpfe können mit den oben beschriebenen Schlitzen versehen sein, die federelastisch auslenkbare Kopfzungen des Montagekopfes bilden.

Die Montageschiene kann zwischen den Montageköpfen einen Mittelabschnitt zur Aufnahme des Fahrungswagens aufweisen, der als Parkabschnitt ausgebildet sein kann. Der auf der Montageschiene aufgesetzte Führungswagen kann transportiert werden, ohne dass Wälzkörper aus dem Führungswagen herausfallen können.

Der Parkabschnitt der Montageschiene kann eine umfangsseitige Parkkontur für den Führungswagen bilden, die gegenüber der Montagekontur radial einwärts abgesetzt ist. Diese Verkleinerung des Querschnitts im Mittelabschnitt ist so bemessen, dass einerseits die am Führungswagen montierten Abstreifer möglichst unbelastet sind und dass andererseits die Wälzkörper einwandfrei gehalten sind.

Die Montageschiene kann aus Kunststoff hergestellt werden, und aus zwei Längsteilen zusammengesetzt sein, die jeweils im Spritzverfahren aus Kunststoff hergestellt sind. Die längsgeteilte Montageschiene ermöglicht ein hinterschnittfreies Ausspritzen der Spritzform. Nach Fertigstellung der Längsteile können diese miteinander gefügt werden, beispielsweise durch Verkleben, oder durch formschlüssigen Verbinden mittels Rasten und Schnappnasen, die zuvor im Spritzverfahren angeformt wurden.

Diese Montageschiene kann hohl ausgeführt sein und deren Längsteile können dünnwandige Wände aufweisen, die an ihren Außenseiten die Dachfläche sowie die Seitenflächen bilden. Die dünnwandigen Wände sind idealerweise dickengleich um fertigungsbedingte innere Spannungen in der Montageschiene zu reduzieren. Eine derartig hergestellte Montageschiene ist von ihrem Gewicht her leicht.

Nachstehend wird die Erfindung anhand von zwei in neun Figuren abgebildeten Ausführungsbeispielen näher erläutert. Es zeigen:
- Figur 1: ein erstes Ausführungsbeispiel in perspektivischer Darstellung, mit einem Führungswagen mit scharfkantiger Führungsschiene und Montageschiene,
- Figur 2: die Montageschiene aus Figur 1 in perspektivischer Darstellung,
- Figur 3: Einzelteile der Montageschiene aus Figur 1,
- Figur 4: ein Ende der Montageschiene in perspektivischer Darstellung,
- Figur 5: eine Ausschnittvergrößerung der Figur 1,
- Figur 6: ein weiteres Ausführungsbeispiel in einer Darstellung wie in Figur 5,
- Figur 7: eine Draufsicht auf den Führungswagen mit Führungsschiene und Montageschiene aus Figur 1,
- Figur 8: eine weitere perspektivische Darstellung zu dem ersten Ausführungsbeispiel und
- Figur 9: eine Ausschnittvergrößerung der Figur 8.

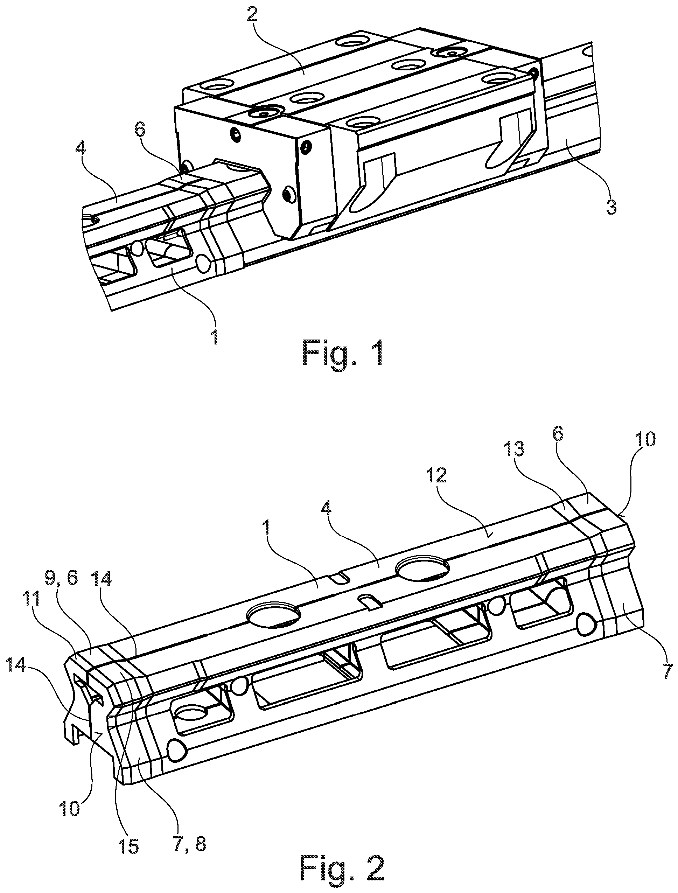

Figuren 1 und zwei zeigen ein erstes Ausführungsbeispiel einer Montageschiene 1 zum Montieren eines Führungswagens 2 einer Linearführung auf eine Führungsschiene 3. Die Montageschiene 1 weist einen Mittelabschnitt 4 zur Aufnahme des Führungswagens 2 auf, sowie an beiden Enden des Mittelabschnitts gelegene Montageköpfe 6 mit einer an eine Kontur der Führungsschiene 1 angepassten Montagekontur 7.

Die Montagekontur 7 umfasst entlang der Längsachse angeordnete, voneinander abgewandte Seitenflächen 8 sowie eine zwischen den Seitenflächen 8 liegende Dachfläche 9, sowie an beiden Montageköpfen 6 endseitig gelegene, quer zu der Längsachse angeordnete Anlageflächen 10 zur Anlage an die Montageschiene 1.

Die eine Anlagefläche 10 weist im Übergang zu den Seitenflächen 8 und zu der Dachfläche 9 des einen Montagekopfes 6 eine Fase 11 auf. Die andere Anlagefläche 10 schließt unmittelbar unter einem Winkel von 90 Grad an die Seitenflächen 8 und an die Dachfläche 9 des anderen Montagekopfes 6 an.

Der Figur 1 kann entnommen werden, dass die Montageschiene 1 mit ihrem kantigen Ende an die Führungsschiene 3 angelegt ist, die ebenfalls ein kantiges Ende hat. Die Montagekontur 7 ist an die Kontur der Führungsschiene 3 angepasst, so dass ein kantenfreier Übergang zwischen den beiden Schienen sichergestellt ist.

Der Mittelabschnitt 4 hat eine Parkkontur 12, die gegenüber der Montagekontur 7 radial abgesetzt ist. Der kantenfreie Übergang von der Parkkontur 12 zu der Montagekontur 7 erfolgt über Rampen 13, die einerseits in die Parkkontur 12 und andererseits in die Montagekontur 7 übergehen.

Figur 2 zeigt deutlich die Ausbildung eines Schlitzes 14, der von der Anlagefläche ausgeht und der sich in Richtung auf das andere axiale Ende hin und radial einwärts erstreckt. Der Schlitz 14 bildet federelastisch auslenkbare Kopfzungen 15 am Montagekopf 6, die gegen eine Federkraft aufeinander zu auslenkbar sind. Der Schlitz 14 ist parallel zur Längsachse der Montageschiene ausgerichtet und mittig in der Montageschiene.

Ferner kann der Figur 2 deutlich entnommen werden, dass deren eines Ende kantig ausgeführt ist und dass deren anderes Ende angefast ist.

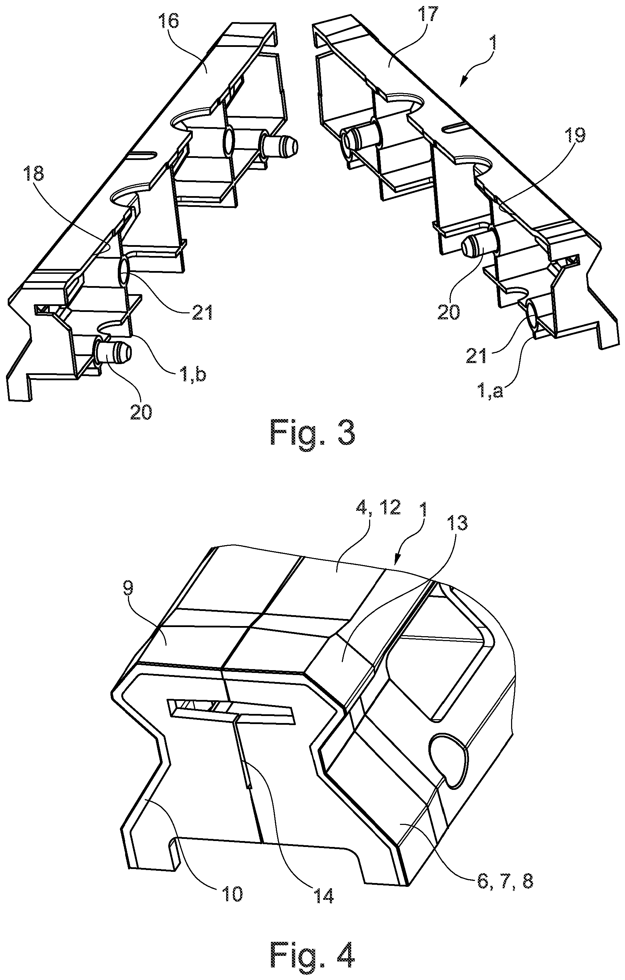

Figur 3 zeigt die hohle Montageschiene 1, die im Ausführungsbeispiel aus Kunststoff im Spritzverfahren hergestellt ist und aus zwei getrennt hergestellten Längsteilen 16, 17 zusammengesetzt ist. Wände 18, 19 der Längsteile 16, 17 sind dünnwandig ausgeführt. Außenseiten der Wände 18, 19 bilden die oben beschriebenen Seitenflächen 8 und die Dachfläche 9. Beide Längsteile16, 17 sind mit Steckern 20 und Sacklöchern 21 versehen. Den Steckern 20 beider Längsteile 16, 17 ist jeweils ein Sackloch 21 des jeweils gegenüberliegenden Längsteiles 16, 17 zugeordnet. Wenn die beiden Längsteile 16, 17 zusammen gesetzt sind, greifen die Stecker 20 in die Sacklöcher 21.

Figur 4 zeigt das ausgeschnittene kantige Ende der Montageschiene 1 mit der Anlagefläche 10, die quer zur Längsachse angeordnet ist und mit radialem Abstand zu der Montagekontur 7 etwas axial zurückgesetzt ist.

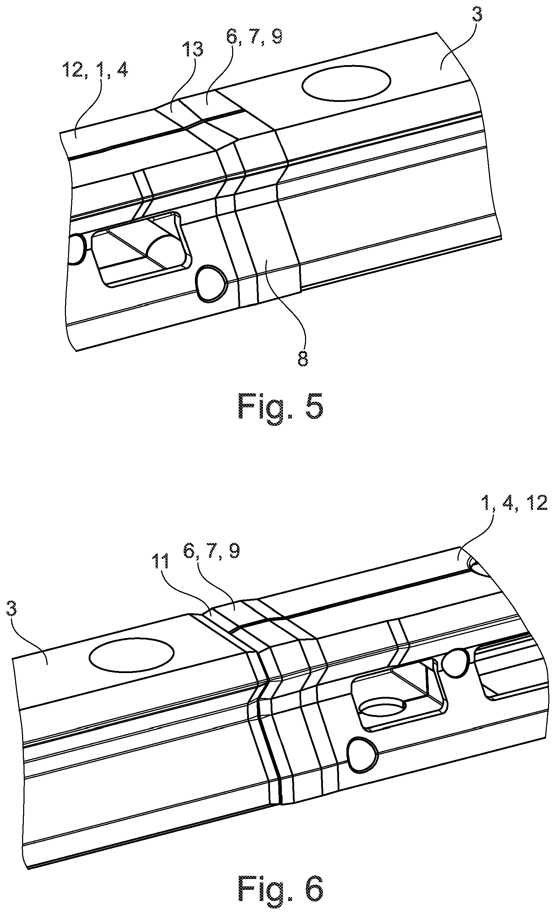

Figur 5 zeigt eine Ausschnittvergrößerung der Figur 1. Deutlich ist dargestellt, dass die Montageschiene 1 und die Führungsschiene 3 mit ihren kantigen Enden aneinander gelegt sind.

Figur 6 zeigt ein zweites Ausführungsbeispiel in einer Darstellung wie in Figur 5. Hier ist die Führungsschiene 3 an ihren Enden angefast. In diesem Fall wird die Montageschiene 1 mit ihrem angefasten Ende gegen die Führungsschiene 3 angelegt.

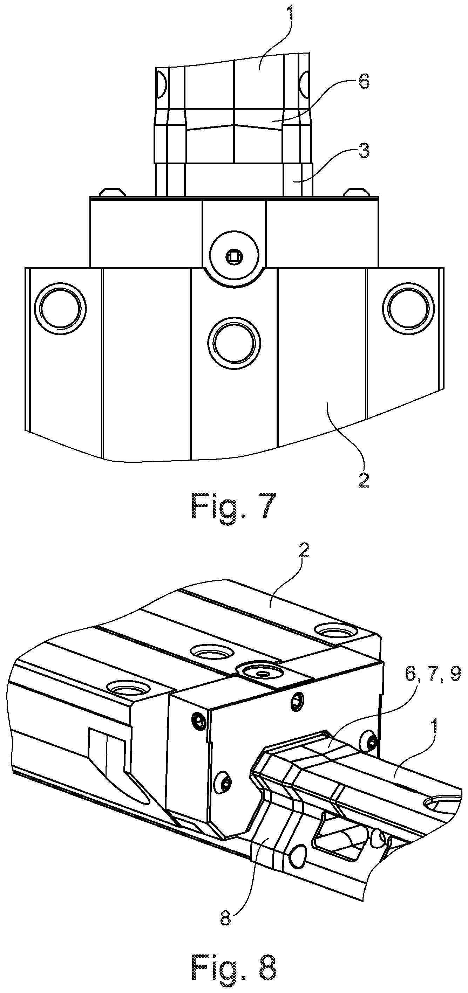

Die Figuren 7 und 8 zeigen deutlich den Übergang von der Führungsschiene 3 auf die Montageschiene 1 mit den aneinander gelegten kantigen Enden beider Schienen.

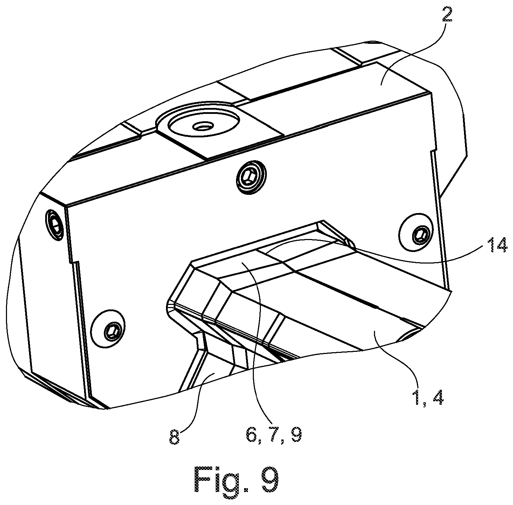

Figur 9 eine Ausschnittvergrößerung der Figur 8. Hier ist deutlich der Schlitz 14 im Montagekopf 6 der Montageschiene 1 zu erkennen.

### Bezugszeichenliste

- 1: Montageschiene
- 2: Führungswagen
- 3: Führungsschiene
- 4: Mittelabschnitt
- 5: -
- 6: Montagekopf
- 7: Montagekontur
- 8: Seitenfläche
- 9: Dachfläche
- 10: Anlagefläche
- 11: Fase
- 12: Parkkontur
- 13: Rampe
- 14: Schlitz
- 15: Kopfzunge
- 16: Längsteil
- 17: Längsteil
- 18: Wand
- 19: Wand
- 20: Stecker
- 21: Sackloch

## Patentansprüche

1. Montageschiene (1) zum Montieren eines Führungswagens (2) einer Linearführung auf eine Führungsschiene (3), mit einer Montagekontur (7), die an voneinander abgewandten Längsseiten der Montageschiene (1) ausgebildete Seitenflächen (8) sowie eine zwischen den Seitenflächen (8) liegende Dachfläche (9) aufweist, sowie stirnseitig angeordnete, quer zur Längsachse angeordnete Anlageflächen (10) zur Anlage an die Montageschiene (1), **dadurch gekennzeichnet, dass** die eine Anlagefläche (10) im Übergang zu den Seitenflächen (8) und zu der Dachfläche (9) eine Fase (11) aufweist und dass die andere Anlagefläche (10) unter einem Winkel von 90 Grad an die Seitenflächen (8) und an die Dachfläche (9) anschließt, wobei wenigstens ein axiales Ende der Montageschiene mit einem von der Anlagefläche (10) ausgehenden Schlitz (14) versehen ist, der sich in Richtung auf das andere axiale Ende der Montageschiene und radial einwärts erstreckt.

2. Montageschiene (1) nach Anspruch 1, die einen Mittelabschnitt (4) zur Aufnahme des Führungswagens (2) aufweist, sowie zu beiden Enden des Mittelabschnitts (4) gelegene Montageköpfe (6) mit den endseitigen Anlageflächen (10).

3. Montageschiene (1) nach Anspruch 2, deren Schlitz (14) federelastisch auslenkbare Kopfzungen (15) des Montagekopfes (6) bildet, die gegen eine Federkraft aufeinander zu auslenkbar sind.

4. Montageschiene (1) nach einem der Ansprüche 1 bis 3, deren Schlitz (14) parallel zur Längsachse und mittig in der Montageschiene (1) angeordnet ist.

5. Montageschiene (1) nach einem der Ansprüche 2 bis 4, deren Mittelabschnitt (4) eine umfangsseitige Parkkontur (12) für den Führungswagen (2) bildet, die gegenüber der Montagekontur (7) radial einwärts abgesetzt ist.

6. Montageschiene (1) nach einem der Ansprüche 1 bis 5, die aus zwei Längsteilen (16, 17) zusammengesetzt ist, die jeweils im Spritzverfahren aus Kunststoff hergestellt sind.

7. Montageschiene (1) nach Anspruch 6, die hohl ist und deren Längsteile (16, 17) dünnwandige Wände (18, 19) aufweisen, die an ihren Außenseiten die Dachfläche (9) sowie die Seitenflächen (8) bilden.

## Claims

1. A mounting rail (1) for mounting a guide carriage (2) of a linear guide onto a guide rail (3), having a mounting contour (7) which has side faces (8) formed on longitudinal sides of the mounting rail (1) that face away from one another and a top face (9) located between the side faces (8), as well as bearing faces (10), arranged at the end sides and transverse to the longitudinal axis, for bearing against the mounting rail (1), **characterized in that** the one bearing face (10) has a chamfer (11) at the transition to the side faces (8) and to the top face (9) and the other bearing face (10) adjoins the side faces (8) and the top face (9) at an angle of 90 degrees, wherein at least one axial end of the mounting rail is provided with a slot (14) which originates from the bearing face (10) and extends towards the other axial end of the mounting rail and radially inwards.

2. The mounting rail (1) according to claim 1, which has a central portion (4) for receiving the guide carriage (2), and mounting heads (6) which are disposed at both ends of the central portion (4) and have end-side bearing faces (10).

3. The mounting rail (1) according to claim 2, the slot (14) of which forms resiliently deflectable head tabs (15) of the mounting head (6), which can be deflected towards each other against a spring force.

4. The mounting rail (1) according to any one of claims 1 to 3, the slot (14) of which is arranged parallel to the longitudinal axis and centrally in the mounting rail (1).

5. The mounting rail (1) according to any one of claims 2 to 4, the central portion (4) of which forms a circumferential parking contour (12) for the guide carriage (2), which parking contour is radially offset inwards with respect to the mounting contour (7).

6. The mounting rail (1) according to any one of claims 1 to 5, which is composed of two longitudinal parts (16, 17), which are each produced from plastic by injection moulding.

7. The mounting rail (1) according to claim 6, which is hollow, has longitudinal parts (16, 17) that have thin walls (18, 19) forming, on their outer sides, the top face (9) and the side faces (8).

## Revendications

1. Rail de montage (1) pour le montage d'un chariot de guidage (2) d'un guide linéaire sur un rail de guidage (3), comportant un contour de montage (7) qui présente des surfaces latérales (8) formées sur des côtés longitudinaux opposés du rail de montage (1) ainsi qu'une surface de toit (9) se trouvant entre les surfaces latérales (8), ainsi que des surfaces d'appui (10) agencées côté frontal et agencées transversalement à l'axe longitudinal pour venir en appui sur le rail de montage (1), **caractérisé en ce qu'**une surface d'appui (10) présente un chanfrein (11) au niveau de la transition vers les surfaces latérales (8) et vers la surface de toit (9) et l'autre surface d'appui (10) se raccorde aux surfaces latérales (8) et à la surface de toit (9) selon un angle de 90 degrés, au moins une extrémité axiale du rail de montage étant munie d'une fente (14) partant de la surface de montage (10), qui s'étend en direction de l'autre extrémité axiale du rail de montage et radialement vers l'intérieur.

2. Rail de montage (1) selon la revendication 1, qui présente une section centrale (4) destinée à recevoir le chariot de guidage (2), ainsi que des têtes de montage (6) situées aux deux extrémités de la section centrale (4) comportant les surfaces d'appui (10) d'extrémité.

3. Rail de montage (1) selon la revendication 2, dont la fente (14) forme des languettes de tête (15) déformables élastiquement de la tête de montage (6) qui peuvent être déviées l'une vers l'autre contre une force de ressort.

4. Rail de montage (1) selon l'une des revendications 1 à 3, dont la fente (14) est agencée parallèlement à l'axe longitudinal et au centre du rail de montage (1).

5. Rail de montage (1) selon l'une des revendications 2 à 4, dont la section centrale (4) forme pour le chariot de guidage (2) un contour de stationnement circonférentiel (12) qui est décalé radialement vers l'intérieur par rapport au contour de montage (7).

6. Rail de montage (1) selon l'une des revendications 1 à 5, qui est composé de deux parties longitudinales (16, 17) qui sont respectivement fabriquées en plastique par moulage par injection.

7. Rail de montage (1) selon la revendication 6, qui est creux et dont les parties longitudinales (16, 17) présentent des parois minces (18, 19) qui forment la surface de toit (9) et les surfaces latérales (8) sur leurs côtés extérieurs.
